# EUROPEAN PATENT APPLICATION

(11) **EP 1 980 529 A1**
(43) Date of publication of application: **15.10.2008**
(21) Application number: 07707762.6
(22) Date of filing: 31.01.2007
(51) Int. Cl.: C01B 31/02

(54) **PROCESS AND APPARATUS FOR PRODUCING CARBON NANOTUBE**

(30) Priority: 01.02.2006 JP 2006024553
(71) Applicant: OTSUKA CHEMICAL COMPANY, LTD., Osaka-shi, Osaka 540-0021 (JP)
(72) Inventor: TANI, Masato, Tokushima-shi Tokushima 771-0193 (JP); GOTO, Toshiki, Tokushima-shi Tokushima 771-0193 (JP)
(74) Representative: TER MEER - STEINMEISTER & PARTNER GbR
(86) International application number: PCT/JP2007/051544
(87) International publication number: WO 2007/088867

(57) **Abstract**

Carbon nanotubes are more efficiently produced with a simpler apparatus. The process, which is for producing carbon nanotubes by the combustion method, is **characterized by** comprising: a step in which a catalyst-supporting powder comprising a base powder and a catalyst supported on the surface thereof is prepared; a step in which the catalyst-supporting powder is deposited on a porous support (2) having through-holes through which a flame passes, so that the powder particles are held in the through-holes without tenaciously adhering to one another; a step in which the porous support (2) having the catalyst-supporting powder held thereon is disposed in a combustion oven (1) in which one end (1b) is open; and a step in which a carbon-containing flame is generated in a burner part (3) disposed at the other end (1a) of the combustion oven (1) and the flame is fed to the through-holes of the porous support (2) to produce carbon nanotubes on the surface of the catalyst-supporting powder present in the through-holes.

## Description

### TECHNICAL FIELD

The present invention relates to process and apparatus for producing carbon nanotube by a combustion method.

### BACKGROUND ART

Arc discharge, laser irradiation and chemical vapor deposition (CVD) have been conventionally known as methods for synthesis of carbon nanotubes. The arc discharge and laser irradiation methods require expensive and dangerous apparatuses such as an evacuator and a high-voltage large-current power source and produce carbon nanotubes in the low yield, which have been problems. The CVD method achieves production of carbon nanotubes generally under low pressure. This not only requires a vacuum apparatus and the like but also complicates control of process conditions such as temperature and pressure, which problematically increase the production cost.

A combustion method utilizing a flame has been noted as a promising industrial production method, because it can obtain both a raw material for carbon nanotubes and a formation energy of carbon nanotubes from a fuel gas. Fullerene, known as carbon nanomaterial other than carbon nanotube, can be produced at low prices by this combustion method.

In Non-patent Literature 1, synthesis of carbon nanotubes is achieved by the combustion method wherein a stainless steel mesh having a catalytic effect is exposed to a flame. However, this process is low in carbon nanotube productivity and also difficult to recover produced carbon nanotubes, which have been problems.

Patent Literature 1 proposes to hold a substrate having a catalyst metal perpendicular to a flame and physically shave off carbon nanotubes formed on the substrate. This case results in the improved yield of carbon nanotubes compared to the case where they are synthesized on the mesh substrate. However, a major portion of the flame that does not come into direct contact with the substrate is wasted because it is unserviceable as a raw material for the carbon nanotubes and only evacuated for diffusion, which raises a problem of low industrial production efficiency.

Patent Literature 2 discloses a method for producing carbon nanotubes by allowing a magnesium oxide substrate to support thereon a catalyst metal and a cocatalyst metal, forming carbon nanotubes by a CVD method and then contacting them with an acid or alkaline solution for dissolution of the substrate, catalyst metal and cocatalyst metal so that the carbon nanotubes are separated therefrom. However, although possible to readily achieve separation and recovery of carbon nanotubes, this method utilizes a CVD method in the production of carbon nanotubes, which requires a vacuum apparatus and the like and involves complex control of process conditions such as temperature and pressure. Accordingly, the problem of high production cost arises.
Patent Literature 1: Japanese Patent Laid-Open No. 2005-247644
Patent Literature 2: Japanese Patent Laid-Open No. 2004-182548
Non-patent Literature 1 : Randall L. VanderWal, Lee J. Proceedings of the combustion Institute, 29(2002), PP.1079-1085

### DISCLOSURE OF THE INVENTION

It is an object of the present invention to provide a process for producing carbon nanotube by which carbon nanotubes can be produced more efficiently with a simpler apparatus and also provide an apparatus for producing carbon nanotube.

The production process of the present invention is a process which produces carbon nanotubes by a combustion method and is characterized as including the steps of preparing a catalyst-supporting powder comprising a base powder and a catalyst supported on a surface of the base powder, allowing a porous support having internal through-pores that permit passage of a flame to hold the catalyst-supporting powder non-adherently within the through-pores, placing the porous support holding the catalyst-supporting powder in a combustion oven having one open end, and generating a carbon-containing flame in a burner portion disposed at the other end of the combustion oven and feeding the flame into the through-pores of the porous support to form carbon nanotubes on the surface of the catalyst-supporting powder within the through-pores.

In the present invention, the catalyst-supporting powder comprising a base powder and a catalyst supported on a surface of the base powder is held non-adherently within the through-pores of the porous support and the carbon-containing flame is subsequently fed into the through-pores of the porous support so that carbon nanotubes are formed on the surface of the catalyst-supporting powder within the through-pores. Since the catalyst-supporting powder is held non-adherently within the through-pores, its entire surface can be utilized in the formation of carbon nanotubes thereon. This enables efficient production of carbon nanotubes.

Also, the catalyst-supporting powder having a surface on which carbon nanotubes have been formed is not affixed to the through-pores of the porous support. Accordingly, the catalyst-supporting powder subsequent to formation of carbon nanotubes can be easily extracted from the porous support.

Also in the present invention, the use of a combustion method in the production of carbon nanotubes eliminates the necessity of controlling complex production conditions such as temperature and pressure and thus permits production of carbon nanotubes with a simpler apparatus. Therefore, a large quantity of carbon nanotubes can be produced economically at low cost, which makes the present process more suitable for industrial production.

Also in the present invention, a shielding member is preferably provided at one end of the combustion oven for directing a part of a flow of the flame back to the porous support side. The provision of such shielding member allows a flow of the flame to partly return to the porous support side and enables the flame containing unreacted carbon to again contact with the catalyst-supporting powder within the through-pores of the porous support, leading to further formation of carbon nanotubes. Accordingly, carbon nanotubes can be produced further efficiently.

Also in the present invention, the base powder preferably comprises a material which is soluble in an acid or alkali. The use of such base powder eases recovery of carbon nanotubes by the fashion which follows. Subsequent to formation of carbon nanotubes on its surface, the catalyst-supporting powder is extracted from the porous support and then contacted to an acid or alkali that dissolves the base powder and the catalyst.

The base powder soluble in an acid or alkali can be illustrated by an oxide or salt of at least one metal selected from Mg, Si, Na, Li, Ca, Al and Zn. Examples of particularly preferred base powders include magnesium hydroxide, magnesium oxide, calcium hydroxide and calcium oxide.

The acid that dissolves the base powder can be illustrated by aqueous solutions of hydrochloric acid, nitric acid, sulfuric acid and organic acid. The alkali that dissolves the base powder can be illustrated by aqueous solutions of sodium hydroxide, potassium hydroxide and ammonia.

Selection of the acid or alkali may be suitably made depending on the type of the base powder used. A concentration of the acid or alkali may preferably be at least 0.01 % by weight, more preferably 0.5 - 10 % by weight, for example.

A temperature of an aqueous solution of the acid or alkali is not particularly specified, so long as it can maintain the state of aqueous solution, but generally preferably within the range of 30 - 80 °C.

The catalyst-supporting powder for use in the present invention comprises the base powder and the catalyst supported on the surface of the base powder. A compound containing at least one metal selected from Co, Cr, Fe, Mo, Ni and V is preferably used as the catalyst to be supported.

The base powder may be allowed to support the catalyst thereon by a method wherein the base powder is contacted to a solution containing a metal salt of the catalyst dissolved therein. Examples of salts of catalyst metal compounds include nitrates, chlorides, sulfates, carboxylates and the like. A concentration of this solution is preferably up to the saturated solubility of the salt, generally 0.005 - 0.5 % by weight, preferably 0. 005 - 0.1 % by weight. Examples of solvents that dissolve the metal salt of the catalyst include water, organic solvents such as lower alcohols (e.g., methanol and ethanol), and mixed solvents containing water and water-soluble organic solvents. The use of water is particularly preferred.

The base powder can be contacted to the solution by various methods such as dipping and spraying. The use of the dipping method is particularly preferred. The base powder is contacted to the solution at a temperature of 0 - 100 °C, preferably 20 - 80 °C, more preferably 40 - 60 °C. After the contact, the solvent is dried to thereby form the catalyst-supporting powder. The drying temperature may be 50 - 300 °C, for example.

The amount of the catalyst supported on the powder is preferably 1-20% by weight, more preferably 5 - 10% by weight, based on the weight of the catalyst-supporting powder.

The porous support in the present invention has the through-pores capable of holding the catalyst-supporting powder. Examples of such porous supports include (1) a tangled metal or ceramic fibers aggregate, (2) a stack of metal or ceramic meshes and (3) a structure made of a porous metal or ceramic. The material for the porous support is preferably heat-resistant and has a melting point of at least 700 °C, more preferably at least 1,000 °C. Examples of such materials include titanium, tungsten, tungsten carbide, molybdenum, stainless steel, aluminum oxide, mullite and quartz. Particularly preferred among them are tungsten, tungsten carbide and stainless steel.

The porous support has internal through-pores which permit passage of a carbon-containing flame in the production of carbon nanotubes and preferably has a volumetric porosity of 50 - 99.9 %, more preferably 98 - 99.9 %.

If the volumetric porosity is below 50 %, efficient production of carbon nanotubes may fail due to the increasing difficulty of the porous support to hold a large quantity of the catalyst-supporting powder. Although an upper limit of the volumetric porosity is not particularly specified, it is generally difficult to fabricate or obtain the porous support having a volumetric porosity of exceeding 99.9 %.

The above-specified volumetric porosity is the one prior to formation of carbon nanotubes. As such carbon nanotubes are formed on the surface of the catalyst-supporting powder, the catalyst-supporting powder within the through-pores increases its volume to reduce the volumetric porosity.

The present invention provides a process for producing carbon nanotubes by a combustion method. In this invention, a carbon-containing flame is generated in the burner portion disposed at the other end of the combustion oven. In general, the flame is generated by burning a carbon-containing gas and an oxygen-containing gas. The burner may be a premixed burner or a diffusion burner. Also, the burner may be provided with a cooling or other heat-dissipation system.

Examples of useful carbon-containing gases include hydrocarbons that can be gasified at elevated temperatures, such as methane, ethane, propane, butane, ethylene, propylene, acetylene, methanol, ethanol, propanol, benzene, toluene and xylene; and hydrocarbons containing oxygen, sulfur, nitrogen or the like. The use of ethylene and propane is particularly preferred.

Examples of useful oxygen-containing gases include air and oxygen. Air is preferably used.

As to a mixing proportion of the carbon-containing gas and the oxygen containing gas, oxygen in the oxygen-containing gas is preferably present in the amount of 0.1 - 20 parts by volume, more preferably 1 - 3 parts by volume, based on 1 part by volume of the carbon-containing gas.

In the present invention, the flame in the combustion oven is preferably a laminar flame free of a turbulent flow. Also, a steady, premixed laminar flame preferably constitutes a gas composition.

In a region of the combustion oven where the porous support is located, a temperature of the flame is preferably maintained within the range of 500 °C - 1, 000 °C, more preferably within the range of 600 °C - 800 °C. If the flame temperature falls below 500 °C, a combustion reaction of the fuel gas does not proceed to result in the failure to form carbon nanotubes. On the other hand, if the flame temperature goes beyond 1, 000 °C, this high temperature retards formation of carbon nanotubes (conversion of carbon into solid form) and subjects carbon nanotubes, even if formed in a small quantity, to burning and decomposition.

Although not particularly specified, a time period during which the catalyst-supporting powder is kept in contact with the flame may be 3 minutes - 30 minutes, more preferably 5 minutes - 15 minutes, for example. If the contact time period is less than 3 minutes, a temperature rise of an entire reaction region inside the combustion oven remains insufficient, so that carbon nanotubes are only formed locally.

On the other hand, if the contact time period exceeds 30 minutes, the reaction region inside the combustion oven is filled with formed carbon nanotubes to such a degree that further growth of carbon nanotubes little occurs. As a result, an efficiency of the fuel gas per product declines.

The production apparatus of the present invention is an apparatus for producing carbon nanotubes by a combustion method. Characteristically, the production apparatus has a porous support having internal through-pores for non-adherently holding a catalyst-supporting powder which comprises a base powder and a catalyst supported on a surface of the base powder, a combustion oven having one open end and an interior portion for accommodation of the porous support and a burner portion disposed at the other end of the combustion oven, and is operable to generate a carbon-containing flame in the burner portion and subsequently feed the flame into the through-pores of the porous support so that carbon tubes are formed on the surface of the catalyst-supporting powder within the through-pores.

Preferably, the production apparatus of the present invention also includes a shielding member provided at the one end of the combustion oven for directing a part of a flow of the flame back to the porous support side. The provision of such a shielding member allows a part of a flow of the flame to return to the porous support side and enables the component remaining unreacted in the flame to again contact with the catalyst-supporting powder within the through-pores of the porous support for formation of carbon nanotubes. Accordingly, carbon nanotubes can be produced further efficiently.

The shielding member is not particularly specified, so long as it can be disposed at the one end of the combustion oven and direct a part of the flame flow back to the porous support side. For example, the shielding member may have the same material type and structure as the porous support. The shielding member in the present invention is preferably configured such that it directs a part of the flame flow back to the porous support side and discharges the other part of the flame flow to outside from the one end of the combustion oven.

### (Effect of the Invention)

In accordance with the present invention, carbon nanotubes can be produced more efficiency with a simpler apparatus.

### BRIEF DESCRIPTION OF THE DRAWINGS

[Figure 1] Figure 1 is a schematic view, showing the apparatus used in Examples in accordance with the present invention for producing carbon nanotubes.
[Figure 2] Figure 2 is a photomicrograph taken using a scanning electron microscope, showing the catalyst-supporting powder with carbon nanotubes formed on its surface, as obtained in Examples in accordance with the present invention.
[Figure 3] Figure 3 is a photomicrograph taken using a scanning electron microscope, showing carbon nanotubes obtained in Examples in accordance with the present invention.

### EXPLANATION OF REFERENCE NUMERALS

1 ... combustion oven
1a ... lower end of the combustion oven
1b ... upper end of the combustion oven
2 ... porous support
3 ... burner
4 ... flame
5 ... shielding member
6 ... mesh tray

### BEST MODE FOR CARRYING OUT THE INVENTION

The present invention is below described in detail by way of Examples. It will be recognized that the following examples merely illustrate the practice of the present invention but are not intended to be limiting thereof. Suitable changes and modifications can be effected without departing from the scope of the present invention.

### (EXAMPLE 1)

### (Production of catalyst-supporting powder)

18 g (0. 45 mol) of magnesium oxide (product of Aldrich Co. : specific surface area 130 m²/g) was dispersed in 600 ml water to prepare a slurry of magnesium oxide.

23.3 g (0.08 mol) of nickel nitrate hexahydrates was dissolved in 200 ml water to prepare an aqueous solution of nickel nitrate.

5. 3 g (0.0015 mol) of ammoniummolybdenate was dissolved in 200 ml water to prepare an aqueous solution of ammonium molybdenate.

The above-prepared aqueous solutions of nickel nitrate and ammonium molybdenate were both added to the magnesium oxide slurry and stirred at 50 °C for 1 hour.

After the reaction was completed, the resultant was allowed to stand and then filtered to obtain a precipitate. This precipitate was thrice washed with water and filtered to obtain a precipitate. The resulting precipitate was dried at 20 °C for 12 hours and then ground in a mortar to obtain 21.2 g of a catalyst-supporting powder. This catalyst-supporting powder was subjected to powder X-ray diffraction analysis, differential thermogravimetric analysis and energy dispersive X-ray analysis and, as a result, confirmed as comprising the catalyst-supporting magnesium hydroxide and magnesium oxide each containing magnesium, nickel and molybdenum at the ratio by mol of 78:14:8. Also, the catalyst metal content of the catalyst-supporting powder was approximately 29 % by weight.

### (Production of carbon nanotubes)

The thus-obtained catalyst-supporting powder was used to produce carbon nanotubes by a combustion method.

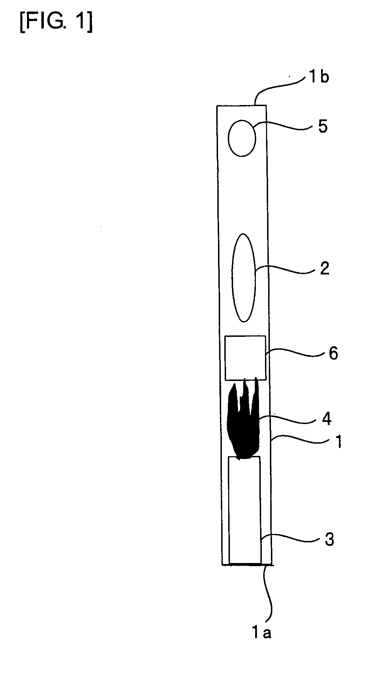

Figure 1 is a schematic view, showing a production apparatus. Disposed at a lower end 1a of a combustion oven 1 is a burner 3 above which a mesh tray 6 is located. A porous support 2 is located above the mesh tray 6. A shielding member 5 is disposed at an upper end of the combustion oven 1.

The combustion oven 1 is 3 cm in inner diameter and 30 cm in height. The burner 3 is 7 cm in height. The mesh tray 6 is located 5 cm above a top edge of the burner 3. This mesh tray 6 is designed to prevent the porous support 2 from falling off.

A brush-like stainless steel aggregate obtained by randomly entangling 0.5 mm wide, 0.1 mm thick and 10 - 100 mm long stainless steel fibers is used as the porous support 2. This porous support 2 has a volumetric porosity of 98 % and is inserted from the upper end 1a of the combustion oven 1 for placement in the position. The porous support 2 is about 6 cm in height and placed in a region 15 - 21 cm away from a bottom of the combustion oven 1.

After the porous support 2 comprising the stainless steel fibers aggregate was placed inside the combustion oven 1 in the preceding fashion, 1.0 g of the catalyst-supporting powder was allowed to fall dispersingly so that the catalyst-supporting powder particles were held within the porous support 2.

Subsequently, a shielding member 5 made by randomly entangling the same stainless steel fibers as used in obtaining the porous support 2 and having a volumetric porosity of 90 % was inserted through the upper end 1b of the combustion oven 1.

A premixed combustion gas containing ethylene and air at the ratio (ethylene:air) by volume of 1.5:10 was supplied to the burner 3 to generate a flame 4. The flame 4 was passed through the mesh tray 6 and the porous support 2, and discharged outside from the shielding member 5. A part of a flow of the flame 4 was directed back to the porous support 2 side by the shielding member 5. The flame was generated for about 10 minutes to form carbon nanotubes on a surface of the catalyst-supporting powder within the porous support 2. A temperature near the porous support 2 was 700 - 900 °C. A differential pressure with respect to an atmosphere was 0.25 - 0.4 Pa and a velocity of an exhaust gas was 0.31 - 0.5 m/second.

After the reaction was completed, nitrogen was passed through the burner to an inside of the combustion oven 1 for about 2 minutes, so that the inside of the combustion oven 1 was cooled to a temperature of not exceeding about 200 °C.

Subsequently, the porous support 2 was removed from the combustion oven 1. The porous support 2 comprising stainless steel fibers was in the form of a cocoon that caught black powder particles therein. These black powder particles were shaken off from the porous support 2 and collected. The collected black powder particles were then added to a 1-N nitric acid at 50 °C, followed by an hour of stirring. This was then filtered through a 5C filter paper to obtain a precipitate which was subsequently dried at 120 °C for 10 hours.

The thus-obtained black substance was observed with a scanning electron microscope and a transmission electron microscope, and further analyzed and measured using a Raman spectroscope and a thermal analyzer. From the results, the obtained black substance was identified as multi-wall carbon nanotube (MWCNT).

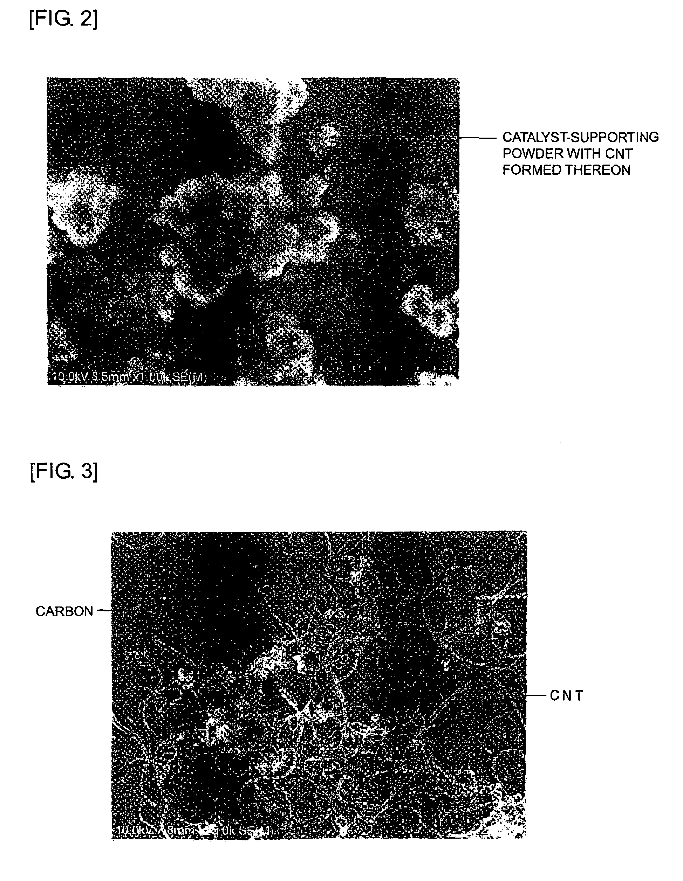

Figure 2 is a photomicrograph taken using a scanning electron microscope, showing the black powder subsequent to removal from the porous support but prior to addition to the nitric acid solution. Figure 3 is a photomicrograph taken using a scanning electron microscope, showing the carbon nanotubes (CNT) obtained subsequent to treatment of the black powder with the nitric acid solution that removed the base powder and the catalyst.

The thus-obtained carbon nanotubes weighed 2.3 g. Accordingly, the process was confirmed to enable efficient production of a large amount of carbon nanotubes.

### (EXAMPLE 2)

The procedure of Example 1 was followed, except that the burner 3 was changed from a premixed burner to a diffusion burner and a premixed combustion gas containing ethylene and air at the ratio (ethylene:air) by volume of 1.75:10 was supplied to the diffusion burner, to produce carbon nanotubes.

Ethylene and air were separately supplied to the diffusion burner. They were mixed just before a burner port and burned.

The thus-obtained carbon nanotubes weighed 3.5 g. Accordingly, the process was confirmed to enable efficient production of a large amount of carbon nanotubes.

### (EXAMPLE 3)

The procedure of Example 1 was followed, except that a metal porous support (product of Sumitomo Electric Toyama Co., Ltd., product name CELMET; nickel-based) was used as the porous support 2, to produce carbon nanotubes.

The metal porous support has a volumetric porosity of 98 %, a height of about 7 cm and a diameter of about 3 cm.

Thecatalyst-supporting powder was held within the metal porous support in the following fashion. After the metal porous support was placed inside the combustion oven 1, 0.2 g of the catalyst-supporting powder was allowed tofalldispersinglyfrom the upper end 1b of the combustion oven 1. Vibration was applied to the metal porous support so that the catalyst-supporting powder particles were shaken off to enter an interior portion of the metal porous support and held therein. This operation was repeated 5 times, so that 1.0 g of the catalyst-supporting powder particles was held dispersedly throughout the interior portion of the metal porous support.

The thus-obtained carbon nanotubes weighed 2.1 g. Accordingly, the process was confirmed to enable efficient production of a large amount of carbon nanotubes.

### (EXAMPLE 4)

The procedure of Example 2 was followed, except that a stack of stainless steel meshes was used as the porous support 2, to produce carbon nanotubes.

The stainless steel mesh was used in the form of a stainless steel mesh cage (3 cm in diameter and 1 cm in height) having a 40-mesh size (40 openings per square inch) with an opening diameter of 0.2 mm. 5 of these stainless steel meshes were arranged above each other to provide a stack thereof for use as the porous support. A volumetric porosity of this porous support was 98.5 %.

0.3 g of the catalyst-supporting powder was allowed to fall dispersingly to the stainless steel mesh cage from above, so that the catalyst-supporting powder were held dispersedly in a bottom portion of the stainless steel mesh cage. 5 of these cages each holding the catalyst-supporting powder were arranged above each other to provide a stack thereof for use as the porous support holding 1.5 g of the catalyst-supporting powder.

The thus-obtained carbon nanotubes weighed 2.2 g. Accordingly, the process was confirmed to enable efficient production of a large amount of carbon nanotubes.

The porous support in the present invention is not limited to those embodied in the above Examples. Any other porous support can be used, so long as it can hold the catalyst-supporting powder non-adherently and has sufficient heat resistance to withstand combustion in the combustion oven.

## Claims

1. A process for producing carbon nanotube by a combustion method, **characterized in that** it includes the steps of:
preparing a catalyst-supporting powder comprising a base powder and a catalyst supported on the base powder;
allowing a porous support having through-pores that permit passage of a flame to hold said catalyst-supporting powder non-adherently within said through-pores of the porous support;
placing the porous support holding the catalyst-supporting powder inside a combustion oven having one open end; and
generating a carbon-containing flame in a burner portion disposed at the other end of said combustion oven and feeding the flame into the through-pores of the porous support so that carbon nanotubes are formed on a surface of the catalyst-supporting powder within the through-pores.

2. The process for producing carbon nanotube as recited in claim 1, **characterized in that** a shielding member is disposed at said one end of the combustion oven for directing a part of a flow of said flame back toward the porous support.

3. The process for producing carbon nanotube as recited in claim 1 or 2, **characterized in that** said base powder comprises a material soluble in an acid or alkali.

4. The process for producing carbon nanotube as recited in claim 3, **characterized in that** said base powder comprises at least one of magnesium hydroxide, magnesium oxide, calcium hydroxide and calcium oxide.

5. The process for producing carbon nanotube as recited in claim 3 or 4, **characterized in that** it further includes a step of extracting the catalyst-supporting powder, subsequent to formation of carbon nanotubes on its surface, from the porous support and contacting it to an acid or alkali to dissolve the base powder for recovery of the carbon nanotubes.

6. The process for producing carbon nanotube as recited in any one of claims 1 - 5, **characterized in that** said porous support comprises an entangled aggregate of metal or ceramic fibers, a stack of metal or ceramic meshes, a porous metal, or a porous ceramic.

7. An apparatus for producing carbon nanotube by a combustion method, **characterized in that** it includes:
a porous support having through-pores for non-adherently holding a catalyst-supporting powder comprising a base powder and a catalyst supported on a surface of the base powder,
a combustion oven having one open end and an interior portion for accommodation of said porous support, and
a burner portion disposed at the other end of the combustion oven;
and is operable to generate a carbon-containing flame in the burner portion and subsequently feed the flame into the through-pores of the porous support so that carbon tubes are formed on a surface of the catalyst-supporting powder within the through-pores.

8. The apparatus for producing carbon nanotube as recited in claim 7, **characterized in that** it further includes a shielding member disposed at said one end of the combustion oven for directing a part of a flow of said flame back toward the porous support.
